# EUROPEAN PATENT APPLICATION

(11) **EP 3 396 914 A1**
(43) Date of publication of application: **31.10.2018**
(21) Application number: 16878063.3
(22) Date of filing: 15.09.2016
(51) Int. Cl.: H04L 27/26, H04B 7/04, H04J 13/22, H04J 99/00, H04W 16/14, H04W 16/28, H04W 72/04

(54) **BASE STATION DEVICE, TERMINAL DEVICE, AND COMMUNICATION METHOD**

(30) Priority: 25.12.2015 JP 2015252981
(71) Applicant: Sharp Kabushiki Kaisha, Sakai City, Osaka 590-8522 (JP)
(72) Inventor: TOMEBA, Hiromichi, Sakai-City, Osaka 590-8522 (JP); YAMADA, Ryota, Sakai City, Osaka 590-8522 (JP)
(74) Representative: Müller-Boré & Partner Patentanwälte PartG mbB
(86) International application number: PCT/JP2016/077218
(87) International publication number: WO 2017/110166

(57) **Abstract**

To provide a base station apparatus, a terminal apparatus, and a communication method, capable of increasing the number of terminal apparatuses that can be spatially multiplexed by the base station apparatus in uplink. A base station apparatus according to an aspect of the present invention is a base station apparatus for communicating with multiple terminal apparatuses, the base station apparatus including a transmission unit configured to notify the terminal apparatuses of DMRS configuration information of DMRSs transmitted over multiple subframes. In addition, a terminal apparatus according to the aspect of the present invention includes: a reception unit that acquires the DMRS configuration information of the DMRSs transmitted across the multiple subframes, notified by the base station apparatus; an uplink reference signal generation unit that generates the DMRSs transmitted across the multiple subframes, based on the DMRS configuration information; and a transmission unit that transmits the DMRSs.

## Description

### TECHNICAL FIELD

The present invention relates to a base station apparatus, a terminal apparatus, and a communication method.

### BACKGROUND ART

In a communication system such as Long Term Evolution (LTE) or LTE-Advanced (LTE-A) standardized by the Third Generation Partnership Project (3GPP), the communication area can be widened by taking a cellular configuration in which areas covered by base station apparatuses (base stations, transmission stations, transmission points, downlink transmission devices, uplink reception devices, a group of transmit antennas, a group of transmit antenna ports, component carriers, eNodeB, access point, an AP) or transmission stations equivalent to the base station apparatuses are arranged in the form of multiple cells (Cells) being linked together. Terminal apparatuses (reception stations, reception points, downlink reception devices, uplink transmission devices, a group of reception antennas, a group of reception antenna ports, UE, stations, STA) connect to the base station apparatuses. In such a cellular configuration, frequency efficiency can be improved by using the same frequency among neighboring cells or sectors.

In the LTE and LTE-A, a Single Carrier Frequency Division Multiple Access (SC-FDMA) scheme is employed as an uplink (terminal apparatus to base station apparatus) transmission scheme. In the SC-FDMA, flexible signal spectrum allocation is performed according to the channel quality of each of users, and high frequency efficiency is thereby achieved. In addition, Multi-User Multiple Input Multiple Output (MU-MIMO), which would make improvement of frequency efficiency by multiple users, who provide a simultaneous access, forming a virtual large-scale antenna array and then spatially multiplexing transmit signals of the respective users, is supported in the LTE uplink as well.

In uplink MU-MIMO, base station apparatuses need to know Channel State Information (CSI) on spatially multiplexed channels with terminal apparatuses. The base station apparatuses can estimate the CSIs, based on the Demodulation Reference Signals (DMRSs) transmitted by the respective terminal apparatuses. Therefore, the DMRSs transmitted by the respective transmission devices need to be in an orthogonal relationship.

The uplink MU-MIMO of the LTE presupposes that signal spectra of spatially multiplexed signals of terminal apparatuses are arranged at the same bandwidth and at the same frequency. Therefore, each of the terminal apparatuses provides specific cyclic shift to the DMRS, and thus the orthogonal relationship is achieved among the DMRSs transmitted from the terminal apparatuses. The uplink MU-MIMO of the LTE-A supports spatial multiplexing of only part of the signal spectra transmitted by the terminal apparatuses as well. In this case, each of the terminal apparatuses spreads the DMRS in time direction with use of specific Orthogonal Cover Code (OCC), to thereby achieve the DMRS orthogonal relationship. The LTE-A supports an OCC of spreading factor 2. Hence, in the uplink MU-MIMO of the LTE-A, multiplexing of partial signal spectra of a maximum of two terminal apparatuses is supported (refer to NPL 1).

Recently, Full-dimensional MIMO (FD-MIMO), which improves a downlink transmission rate by increasing the number of antennas included in the base station apparatus, has been studied. Increasing the number of antennas included in the base station apparatuses suggests that it is possible to increase the number of terminal apparatuses spatially multiplexed in the uplink MU-MIMO (refer to NPL 2).

### CITATION LIST

NPL 1: 3GPP R1-094911, Nov. 2009.
NPL 2: 3GPP RP-151856, Dec. 2015.

### DISCLOSURE OF THE INVENTION

### Problems to be Solved by the Invention

However, the number of terminal apparatuses that can be spatially multiplexed by the base station apparatuses in the uplink MU-MIMO also depends on the number of DMRSs of which orthogonal relationship can be achieved, in addition to the number of antennas included in the base station apparatuses themselves. In the DMRS transmission method of the LTE-A or an earlier communication system, however, even in a case that a base station apparatus includes a number of antennas for achieving the DMRS orthogonal relationship, the number of terminal apparatuses that can be spatially multiplexed by a base station apparatus is limited to 2, in the uplink MU-MIMO that allows multiplexing of partial signal spectra.

The present invention has been made in view of the above-described circumstance, and an object of the present invention is to provide a base station apparatus, a terminal apparatus, and a communication method, capable of increasing the number of terminal apparatuses that can be spatially multiplexed in uplink.

### Means for Solving the Problems

To address the above-mentioned drawbacks, a base station apparatus, a terminal apparatus, and a communication method according to an aspect of the present invention are configured as follows.
(1) Specifically, a base station apparatus according to an aspect of the present invention is a base station apparatus for communicating with multiple terminal apparatuses, the base station apparatus including a transmission unit configured to notify the terminal apparatuses of DMRS configuration information of DMRSs transmitted over multiple subframes.
(2) A base station apparatus according to an aspect of the present invention is the base station apparatus described in the above item (1), in which the DMRS configuration information includes information indicating one of OCC sequences of three or more spreading factors.
(3) A base station apparatus according to an aspect of the present invention is the base station apparatus described in the above item (2), in which the information indicating one of the OCC sequences of three or more spreading factors is associated with cyclic shift quantities applied to the DMRSs.
(4) A base station apparatus according to an aspect of the present invention is the base station apparatus described in the above item (1), in which the DMRS configuration information includes at least one of a subframe number, a slot number, and a SC-FDMA symbol number for transmitting the DMRSs by the terminal apparatuses.
(5) Abase station apparatus according to an aspect of the present invention is a base station apparatus for communicating with multiple terminal apparatuses, the base station apparatus including a transmission unit configured to notify the terminal apparatuses of DMRS configuration information associated with DMRSs having comb-teeth-shaped signal spectra. The DMRS configuration information includes first information indicating at least either intervals of signal spectra of the DMRSs having the comb-teeth-shaped signal spectra or allocated frequency positions of the DMRSs having the comb-teeth-shaped signal spectra, and the first information is associated with information indicating cyclic shift quantities applied to the DMRSs.
(6) A base station apparatus according to an aspect of the present invention is the base station apparatus described in the above item (5), in which the DMRS configuration information includes information indicating one of OCC sequences, and the first information and the information indicating one of the OCC sequences are associated with information indicating the cyclic shift quantities applied to the DMRSs.
(7) A base station apparatus according to an aspect of the present invention is a base station apparatus for communicating with multiple terminal apparatuses, the base station apparatus including a transmission unit configured to notify the terminal apparatuses of DMRS configuration information for configuring resources on which the terminal apparatuses transmit DMRSs, in resources on which the terminal apparatuses transmit signals other than the DMRSs.
(8) A base station apparatus according to an aspect of the present invention is the base station apparatus described in the above item (7), in which the DMRS configuration information includes information for configuring resources to be configured in resources on which the terminal apparatuses transmit SRSs, in the resources on which the terminal apparatuses transmit the DMRSs.
(9) A base station apparatus according to an aspect of the present invention is the base station apparatus described in the above item (8), in which the DMRS configuration information includes information for not configuring, in a case that the terminal apparatuses transmit the SRSs on the resource to be configured in resources on which the terminal apparatuses transmit SRSs, resources to be configured in the resources on which the terminal apparatuses transmit the SRSs, in the resources on which the terminal apparatuses transmit the DMRSs.
(10) Abase station apparatus according to an aspect of the present invention is the base station apparatus described in the above item (7), in which the DMRS configuration information includes information for configuring resources to be configured in resources on which the terminal apparatuses transmit a PUSCH, in the resources on which the terminal apparatuses transmit the DMRS.
(11) A terminal apparatus according to an aspect of the present invention is a terminal apparatus for communicating with a base station apparatus, the terminal apparatus including: a reception unit configured to acquire DMRS configuration information of DMRS s transmitted over multiple subframes, the DMRS configuration information being notified from the base station apparatus; an uplink reference signal generation unit configured to generate the DMRSs to be transmitted over the multiple subframes, based on the DMRS configuration information; and a transmission unit configured to transmit the DMRSs.
(12) A terminal apparatus according to an aspect of the present invention is a terminal apparatus for communicating with a base station apparatus, the terminal apparatus including: a reception unit configured to acquire DMRS configuration information associated with DMRSs having comb-teeth-shaped signal spectra, the DMRS configuration information being notified by the base station apparatus; an uplink reference signal generation unit configured to generate the DMRSs having the comb-teeth-shaped signal spectra, based on the DMRS configuration information; and a transmission unit configured to transmit the DMRSs. The DMRS configuration information includes first information indicating at least either intervals of signal spectra of the DMRSs having the comb-teeth-shaped signal spectra or allocated frequency positions of the DMRSs having the comb-teeth-shaped signal spectra, and the first information is associated with information indicating cyclic shift quantities applied to the DMRSs.
(13) A terminal apparatus according to an aspect of the present invention is a terminal apparatus for communicating with a base station apparatus, the terminal apparatus including: an uplink reference signal generation unit configured to generate DMRSs; a transmission unit configured to transmit the DMRSs; and a reception unit configured to acquire DMRS configuration information for configuring resources on which the transmission unit transmits the DMRSs, in resources on which the transmission unit transmits signals other than the DMRSs, the DMRS configuration information being notified by the base station apparatus,
(14) A communication method according to an aspect of the present invention is a communication method of a base station apparatus for communicating with multiple terminal apparatuses, the communication method including the step of notifying the terminal apparatus of DMRS configuration information of DMRSs transmitted over multiple subframes.

### Effects of the Invention

According to an aspect of the present invention, there is provided a base station apparatus, a terminal apparatus, and a communication method, capable of increasing the number of terminal apparatuses that can be spatially multiplexed by the base station apparatus in uplink, while maintaining backward compatibility, so that the number of spatially multiplexed terminals in uplink increases and consequently frequency efficiency of a communication system is improved.

### BRIEF DESCRIPTION OF THE DRAWINGS

FIG. 1 is a diagram illustrating an example of a communication system according to an aspect of the present embodiment.
FIG. 2 is a block diagram illustrating a configuration example of a base station apparatus according to an aspect of the present embodiment.
FIG. 3 is a block diagram illustrating a configuration example of a terminal apparatus according to an aspect of the present embodiment.
FIG. 4 is a diagram illustrating an example of a frame format according to an aspect of the present invention.
FIG. 5 is a table illustrating an example of radio parameters according to an aspect of the present invention.
FIG. 6 is a diagram illustrating an example of a DMRS transmission method according to an aspect of the present invention.
FIG. 7 is a diagram illustrating an example of the DMRS transmission method according to the aspect of the present invention.
FIG. 8 is a diagram illustrating an example of the DMRS transmission method according to the aspect of the present invention.
FIG. 9 is a diagram illustrating an example of the frame format according to the aspect of the present invention.
FIG. 10 is a diagram illustrating an example of the frame format according to the aspect of the present invention.

### MODE FOR CARRYING OUT THE INVENTION

A communication system according to the present embodiment includes a base station apparatus (a transmission unit, cells, a transmission point, a group of transmit antennas, a group of transmit antenna ports, component carriers, eNodeB, an access point, an AP, a radio router, a repeater, a communication device) and terminal apparatuses (a terminal, a mobile terminal, a reception point, a reception terminal, a reception unit, a group of receive antennas, a group of receive antenna ports, a UE, a station, an STA).

According to the present embodiment, "X/Y" includes the meaning of "X or Y". According to the present embodiment, "X/Y" includes the meaning of "X and Y". According to the present embodiment, "X/Y" includes the meaning of "X and/or Y".

### 1. First Embodiment

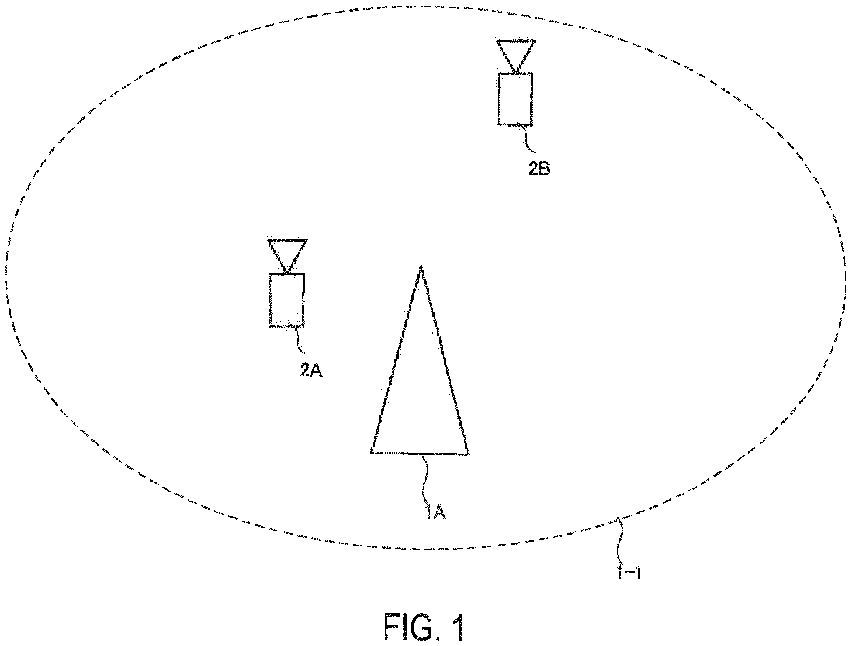

FIG. 1 is a diagram illustrating an example of a communication system according to the present embodiment. As illustrated in FIG. 1, the communication system according to the present embodiment includes a base station apparatus 1A and terminal apparatuses 2A and 2B. Coverage 1-1 is a range (a communication area) in which the base station apparatus 1A can connect to the terminal apparatuses. Note that the communication system according to the present embodiment can include three or more terminal apparatuses 2. For example, the communication system according to the present embodiment can further include terminal apparatuses 2C, 2D, and 2E. The terminal apparatuses 2A, 2B, 2C, 2D, and 2E are also collectively referred to as terminal apparatuses 2.

With respect to FIG. 1, the following uplink physical channels are used for uplink radio communication from the terminal apparatus 2 to the base station apparatus 1A. The uplink physical channels are used for transmission of information output from higher layers.
- Physical Uplink Control Channel (PUCCH)
- Physical Uplink Shared Channel (PUSCH)
- Physical Random Access Channel (PRACH)

The PUCCH is used for transmission of Uplink Control Information (UCI). The Uplink Control Information includes a positive acknowledgement (ACK) or a negative acknowledgement (NACK) (ACK/NACK) for downlink data (a downlink transport block or a Downlink-Shared Channel (DL-SCH)). ACK/NACK for the downlink data is also referred to as HARQ-ACK or HARQ feedback.

Here, the Uplink Control Information includes Channel State Information (CSI) for the downlink. The Uplink Control Information includes a Scheduling Request (SR) used to request an Uplink-Shared Channel (UL-SCH) resource. The Channel State Information refers to a Rank Indicator (RI) specifying a suited spatial multiplexing number, a Precoding Matrix Indicator (PMI) specifying a suited precoder, a Channel Quality Indicator (CQI) specifying a suited transmission rate, and the like.

The Channel Quality Indicator (hereinafter, referred to as a CQI value) can be a suited modulation scheme (e.g., QPSK, 16QAM, 64QAM, 256QAM, or the like) and a suited code rate in a predetermined band (details of which will be described later). The CQI value can be an index (CQI Index) determined by the above change scheme, coding rate, and the like. The CQI value can take a value determined beforehand in the system.

The Rank Indicator and the Precoding Quality Indicator can take the values determined beforehand in the system. Each of the Rank Indicator, the Precoding Matrix Indicator, and the like can be an index determined by the number of spatial multiplexing, Precoding Matrix information, or the like. Note that values of the Rank Indicator, the Precoding Matrix Indicator, and the Channel Quality Indicator are collectively referred to as CSI values.

PUSCH is used for transmission of uplink data (an uplink transport block, UL-SCH). Furthermore, PUSCH may be used for transmission of ACK/NACK and/or Channel State Information along with the uplink data. In addition, PUSCH may be used to transmit the Uplink Control Information only.

PUSCH is used to transmit an RRC message. The RRC message is a signal/information that is processed in a Radio Resource Control (RRC) layer. Further, PUSCH is used to transmit an MAC Control Element (CE). Here, MAC CE is a signal/information that is processed (transmitted) in a Medium Access Control (MAC) layer.

For example, a power headroom may be included in MAC CE and may be reported via PUSCH. In other words, a MAC CE field may be used to indicate a level of the power headroom.

The PRACH is used to transmit a random access preamble.

In the uplink radio communication, an UpLink Reference Signal (UL RS) is used as an uplink physical signal. The uplink physical signal is not used for transmission of information output from higher layers, but is used by the physical layer. The Uplink Reference Signal includes a DeModulation Reference Signal (DMRS) and a Sounding Reference Signal (SRS).

The DMRS is associated with transmission of the PUSCH or the PUCCH. For example, the base station apparatus 1A uses DMRS in order to perform channel compensation of PUSCH or PUCCH. The SRS is not associated with the transmission of the PUSCH or the PUCCH. For example, the base station apparatus 1A uses SRS to measure an uplink channel state. The base station apparatus 1A can notify SRS configuration information by higher layer signaling or by a DCI format which will be described later. The base station apparatus 1A can notify DMRS configuration information by higher layer signaling or by the DCI format which will be described later.

For the SRS, multiple trigger types are defined. For example, trigger type 0 triggered by higher layer signaling and trigger type 1 triggered by downlink control information which will be describe later are defined.

The SRS include a Cell-specific SRS (or Common SRS); and a UE-specific SRS (or Dedicated SRS). The UE-specific SRS include an SRS (UE-specific periodic SRS) to be periodically transmitted and an SRS (UE-specific aperiodic SRS) to be aperiodically transmitted based on a trigger.

For the Common SRS, a transmission bandwidth (srs-BandwidthConfig) and a transmitted subframe (srs-SubframeConfig) are specified by higher layer signaling or by downlink control information which will be described later. In addition, the Common SRS is not transmitted in a subframe including the PUCCH that includes at least one of the HARQ-ACK and the SR, in a case that a prescribed parameter (for example, ackNackSRS-SimultaneousTransmission) indicates False. On the other hand, the Common SRS can be transmitted in a subframe including the PUCCH that includes at least one of the HARQ-ACK and the SR, in a case that a prescribed parameter (ackNackSRS-SimultaneousTransmission) indicates True.

For the Dedicated SRS, a transmission bandwidth, a hopping bandwidth (srs-HoppingBandwidth), a frequency allocation start position (freqDomainPosition), a transmission duration (Duration) (Single transmission or indefinite transmission), a transmission cycle (srs-ConfigIndex), cyclic shift quantities (cyclicShift) applied to the SRS signal sequence, and a SRS position (transmissionComb) formed in the shape of comb teeth are configured by higher layer signaling or by downlink control information which will be described later.

The SRS can be transmitted from multiple antenna ports. The number of transmission antenna ports is configured by higher layer signaling. The UE for which SRS transmission in multiple antenna ports is configured needs to transmit the SRSs from all of the configured transmission antenna ports to the serving cell, with use of one SC-FDMA symbol of the same subframe. In this case, for all the SRS transmitted from the configured transmission antenna ports, the same transmission bandwidths and frequency allocation start positions are configured.

The UE for which multiple Transmission advance groups (TAGs) is not configured need not to transmit any SRS unless the SRS and the PUSCH overlap each other in the same symbol.

With respect to a TDD serving cell, in a case that one SC-FDMA symbol is included in UpPTS of the serving cell, the UE can use the SC-FDMA symbol for SRS transmission. In a case that two SC-FDMA symbols are included in UpPTS of the serving cell, the UE can use both of the two SC-FDMA symbols for SRS transmission. Further, for the SRS of trigger type 0, both of the two SC-FDMA symbols can be configured to the SRS with respect to the same UE.

In FIG. 1, the following downlink physical channels are used for the downlink radio communication from the base station apparatus 1A to the terminal apparatus 2A. The downlink physical channels are used for transmission of information output from higher layers.
- Physical Broadcast Channel (PBCH)
- Physical Control Format Indicator Channel (PCFICH)
- Physical Hybrid automatic repeat request Indicator Channel (PHICH)
- Physical Downlink Control Channel (PDCCH)
- Enhanced Physical Downlink Control Channel (EPDCCH)
- Physical Downlink Shared Channel (PDSCH)

PBCH is used for broadcasting a Master Information Block (MIB, a Broadcast Channel (BCH)) that is shared by the terminal apparatuses. PCFICH is used for transmission of information indicating a region (e.g., the number of OFDM symbols) to be used for transmission of PDCCH.

PHICH is used for transmission of ACK/NACK with respect to uplink data (a transport block, a codeword) received by the base station apparatus 1A. In other words, PHICH is used for transmission of a HARQ indicator (HARQ feedback) indicating ACK/NACK with respect to the uplink data. Note that ACK/NACK is also called HARQ-ACK. The terminal apparatus 2A reports ACK/NACK having been received to a higher layer. ACK/NACK refers to ACK indicating a successful reception, NACK indicating an unsuccessful reception, and DTX indicating that no corresponding data is present. In a case that PHICH for uplink data is not present, the terminal apparatus 2A reports ACK to a higher layer.

The PDCCH and the EPDCCH are used for transmission of Downlink Control Information (DCI). Here, multiple DCI formats are defined for transmission of the downlink control information. In other words, a field for the downlink control information is defined in a DCI format and is mapped to information bits.

For example, as a DCI format for the downlink, DCI format 1A to be used for the scheduling of one PDSCH in one cell (transmission of a single downlink transport block) is defined.

For example, the DCI format for the downlink includes downlink control information such as information of PDSCH resource allocation, information of a Modulation and Coding Scheme (MCS) for PDSCH, a TPC command for PUCCH, and the like. Here, the DCI format for the downlink is also referred to as downlink grant (or downlink assignment).

Furthermore, for example, as a DCI format for the uplink, DCI format 0 to be used for the scheduling of one PUSCH in one cell (transmission of a single uplink transport block) is defined.

For example, the DCI format for the uplink includes uplink control information such as information of PUSCH resource allocation, information of MCS for PUSCH, a TPC command for PUSCH, and the like. Here, the DCI format for the uplink is also referred to as uplink grant (or uplink assignment).

Further, the DCI format for uplink can be used to make a request (CSI request) for downlink Channel State Information (CSI; also referred to as reception quality information). The Channel State Information refers to the Rank Indicator (RI) specifying a suited number of spatial multiplexing, the Precoding Matrix Indicator (PMI) specifying a suited precoder, the Channel Quality Indicator (CQI) specifying a suited transmission rate, Precoding type Indicator (PTI) and the like.

The DCI format for the uplink can be used for a configuration indicating an uplink resource to which a CSI feedback report is mapped, the CSI feedback report being fed back to the base station apparatus by the terminal apparatus. For example, the CSI feedback report can be used for a configuration indicating an uplink resource for periodically reporting Channel State Information (Periodic CSI). The CSI feedback report can be used for a mode configuration (CSI report mode) to periodically report the Channel State Information.

For example, the CSI feedback report can be used for a configuration indicating an uplink resource to report aperiodic Channel State Information (Aperiodic CSI). The CSI feedback report can be used for a mode configuration (CSI report mode) to aperiodically report the Channel State Information. The base station apparatus can configure any one of the periodic CSI feedback report and the aperiodic CSI feedback report. In addition, the base station apparatus can configure both the periodic CSI feedback report and the aperiodic CSI feedback report.

The DCI format for the uplink can be used for a configuration indicating a type of the CSI feedback report that is fed back to the base station apparatus by the terminal apparatus. The type of the CSI feedback report includes wideband CSI (e.g., Wideband CQI), narrowband CSI (e.g., Subband CQI), and the like.

In a case that a PDSCH resource is scheduled in accordance with the downlink assignment, the terminal apparatus receives downlink data on the scheduled PDSCH. In a case that a PUSCH resource is scheduled in accordance with the uplink grant, the terminal apparatus transmits uplink data and/or uplink control information of the scheduled PUSCH.

PDSCH is used for transmission of downlink data (a downlink transport block, DL-SCH). PDSCH is used to transmit a system information block type 1 message. The system information block type 1 message is cell-specific information.

The PDSCH is used to transmit a system information message. The system information message includes a system information block X other than the system information block type 1. The system information message is cell-specific information.

PDSCH is used to transmit an RRC message. Here, the RRC message transmitted from the base station apparatus may be shared by multiple terminal apparatuses in a cell. Further, the RRC message transmitted from the base station apparatus 1A may be a dedicated message to a given terminal apparatus 2 (also referred to as dedicated signaling). In other words, user-equipment-specific information (unique to user equipment) is transmitted using a message dedicated to the given terminal apparatus. PDSCH is used for transmission of MAC CE.

Here, the RRC message and/or MAC CE is also referred to as higher layer signaling.

PDSCH can be used to request downlink channel state information. PDSCH can be used for transmission of an uplink resource to which a CSI feedback report is mapped, the CSI feedback report being fed back to the base station apparatus by the terminal apparatus. For example, the CSI feedback report can be used for a configuration indicating an uplink resource for periodically reporting Channel State Information (Periodic CSI). The CSI feedback report can be used for a mode configuration (CSI report mode) to periodically report the Channel State Information.

The type of the downlink CSI feedback report includes wideband CSI (e.g., Wideband CSI) and narrowband CSI (e.g., Subband CSI). The wideband CSI calculates one piece of Channel State Information for the system band of a cell. The narrowband CSI divides the system band in predetermined units, and calculates one piece of Channel State Information for each division.

In the downlink radio communication, a Synchronization signal (SS) and a DownLink Reference Signal (DL RS) are used as downlink physical signals. The downlink physical signals are not used for transmission of information output from the higher layers, but are used by the physical layer.

The Synchronization signal is used for the terminal apparatus to be synchronized to frequency and time domains in the downlink. The Downlink Reference Signal is used for the terminal apparatus to perform channel compensation on a downlink physical channel. For example, the Downlink Reference Signal is used for the terminal apparatus to calculate the downlink Channel State Information.

Here, the Downlink Reference Signals include a Cell-specific Reference Signal (CRS), a UE-specific Reference Signal (URS) or a terminal-specific reference signal relating to PDSCH, a DeModulation Reference Signal (DMRS) relating to EPDCCH, a Non-Zero Power Chanel State Information - Reference Signal (NZP CSI-RS), and a Zero Power Chanel State Information - Reference Signal (ZP CSI-RS).

CRS is transmitted in all bands of a subframe and is used to perform demodulation of PBCH/PDCCH/PHICH/PCFICH/PDSCH. URS relating to PDSCH is transmitted in a subframe and a band that are used for transmission of PDSCH to which URS relates, and is used to demodulate PDSCH to which URS relates.

DMRS relating to EPDCCH is transmitted in a subframe and a band that are used for transmission of EPDCCH to which DMRS relates. DMRS is used to demodulate EPDCCH to which DMRS relates.

A resource for NZP CSI-RS is configured by the base station apparatus 1A. For example, the terminal apparatus 2A performs signal measurement (channel measurement), using NZP CSI-RS. A resource for ZP CSI-RS is configured by the base station apparatus 1A. With zero output, the base station apparatus 1A transmits ZP CSI-RS. The terminal apparatus 2A performs interference measurement in a resource to which NZP CSI-RS corresponds, for example.

A Multimedia Broadcast multicast service Single Frequency Network (MBSFN) RS is transmitted in all bands of the subframe used for transmitting PMCH. MBSFN RS is used to demodulate PMCH. PMCH is transmitted on the antenna port used for transmission of MBSFN RS.

Here, the downlink physical channel and the downlink physical signal are also collectively referred to as a downlink signal. The uplink physical channel and the uplink physical signal are also collectively referred to as an uplink signal. The downlink physical channels and the uplink physical channels are collectively referred to as physical channels. The downlink physical signals and the uplink physical signals are also collectively referred to as physical signals.

BCH, UL-SCH, and DL-SCH are transport channels. Channels used in the Medium Access Control (MAC) layer are referred to as transport channels. A unit of the transport channel used in the MAC layer is also referred to as a Transport Block (TB) or a MAC Protocol Data Unit (PDU). The transport block is a unit of data that the MAC layer delivers to the physical layer. In the physical layer, the transport block is mapped to a codeword and subject to coding processing or the like on a codeword basis.

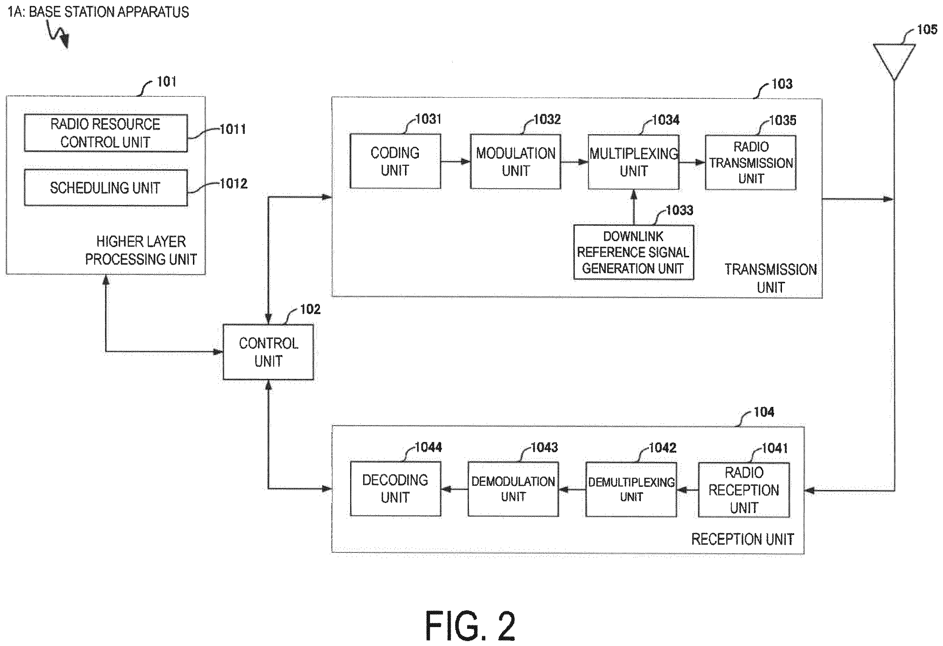

FIG. 2 is a schematic block diagram illustrating a configuration of the base station apparatus 1A according to the present embodiment. As illustrated in FIG. 2, the base station apparatus 1A is configured including a higher layer processing unit (higher layer processing step) 101, a control unit (controlling step) 102, a transmission unit (transmitting step) 103, a reception unit (receiving step) 104, and an antenna 105. The higher layer processing unit 101 is configured including a radio resource control unit (radio resource controlling step) 1011 and a scheduling unit (scheduling step) 1012. The transmission unit 103 is configured, including a coding unit (coding step) 1031, a modulation unit (modulating step) 1032, a downlink reference signal generation unit (downlink reference signal generating step) 1033, a multiplexing unit (multiplexing step) 1034, and a radio transmission unit (radio transmitting step) 1035. The reception unit 104 is configured including a radio reception unit (radio receiving step) 1041, a demultiplexing unit (demultiplexing step) 1042, a demodulation unit (demodulating step) 1043, and a decoding unit (decoding step) 1044.

The higher layer processing unit 101 performs processing of the Medium Access Control (MAC) layer, the Packet Data Convergence Protocol (PDCP) layer, the Radio Link Control (RLC) layer, and the Radio Resource Control (RRC) layer. Furthermore, the higher layer processing unit 101 generates information necessary for control of the transmission unit 103 and the reception unit 104, and outputs the generated information to the control unit 102.

The higher layer processing unit 101 receives information of a terminal apparatus, such as UE capability or the like, from the terminal apparatus. To rephrase, the terminal apparatus transmits its function to the base station apparatus by higher layer signaling.

Note that in the following description, information of a terminal apparatus includes information indicating whether the stated terminal apparatus supports a prescribed function, or information indicating that the stated terminal apparatus has completed the introduction and test of a prescribed function. In the following description, information of whether the prescribed function is supported includes information of whether the introduction and test of the prescribed function have been completed.

For example, in a case that a terminal apparatus supports a prescribed function, the stated terminal apparatus transmits information (parameters) indicating whether the prescribed function is supported. In a case that a terminal apparatus does not support a prescribed function, the stated terminal apparatus does not transmit information (parameters) indicating whether the prescribed function is supported. In other words, whether the prescribed function is supported is reported by whether information (parameters) indicating whether the prescribed function is supported is transmitted. Information (parameters) indicating whether a prescribed function is supported may be reported using one bit of 1 or 0.

The radio resource control unit 1011 generates, or acquires from a higher node, the downlink data (the transport block) arranged in the downlink PDSCH, system information, the RRC message, the MAC Control Element (CE), and the like. The radio resource control unit 1011 outputs the downlink data to the transmission unit 103, and outputs other information to the control unit 102. Furthermore, the radio resource control unit 1011 manages various configuration information of the terminal apparatuses.

The scheduling unit 1012 determines a frequency and a subframe to which the physical channels (PDSCH and PUSCH) are allocated, the coding rate and modulation scheme (or MCS) for the physical channels (PDSCH and PUSCH), the transmit power, and the like. The scheduling unit 1012 outputs the determined information to the control unit 102.

The scheduling unit 1012 generates the information to be used for the scheduling of the physical channels (PDSCH and PUSCH), based on the result of the scheduling. The scheduling unit 1012 outputs the generated information to the control unit 102.

Based on the information input from the higher layer processing unit 101, the control unit 102 generates a control signal for controlling of the transmission unit 103 and the reception unit 104. The control unit 102 generates the downlink control information based on the information input from the higher layer processing unit 101, and outputs the generated information to the transmission unit 103.

The transmission unit 103 generates the downlink reference signal in accordance with the control signal input from the control unit 102, codes and modulates the HARQ indicator, the downlink control information, and the downlink data that are input from the higher layer processing unit 101, multiplexes PHICH, PDCCH, EPDCCH, PDSCH, and the downlink reference signal, and transmits a signal obtained through the multiplexing to the terminal apparatus 2 through the antenna 105.

The coding unit 1031 codes the HARQ indicator, the downlink control information, and the downlink data that are input from the higher layer processing unit 101, in compliance with the coding scheme prescribed in advance, such as block coding, convolutional coding, or turbo coding, or in compliance with the coding scheme determined by the radio resource control unit 1011. The modulation unit 1032 modulates the coded bits input from the coding unit 1031, in compliance with the modulation scheme prescribed in advance, such as Binary Phase Shift Keying (BPSK), quadrature Phase Shift Keying (QPSK), quadrature amplitude modulation (16QAM), 64QAM, or 256QAM, or in compliance with the modulation scheme determined by the radio resource control unit 2011.

The downlink reference signal generation unit 1033 generates, as the downlink reference signal, a sequence that is already learned to the terminal apparatus 2A and that is acquired in accordance with a rule prescribed in advance based on the physical cell identity (PCI, cell ID) for identifying the base station apparatus 1A, and the like.

The multiplexing unit 1034 multiplexes the modulated modulation symbol of each channel, the generated downlink reference signal, and the downlink control information. To be more specific, the multiplexing unit 1034 maps the modulated modulation symbol of each channel, the generated downlink reference signal, and the downlink control information to the resource elements.

The radio transmission unit 1035 performs Inverse Fast Fourier Transform (IFFT) on the modulation symbol resulting from the multiplexing or the like, generates an OFDM symbol, attaches a cyclic prefix (CP) to the generated OFDM symbol, generates a baseband digital signal, converts the baseband digital signal into an analog signal, removes unnecessary frequency components through filtering, up-converts a result of the removal into a signal of a carrier frequency, performs power amplification, and outputs a final result to the antenna 105 for transmission.

In accordance with the control signal input from the control unit 102, the reception unit 104 demultiplexes, demodulates, and decodes the reception signal received from the terminal apparatus 2A through the transmit and/or receive antenna 105, and outputs information resulting from the decoding to the higher layer processing unit 101.

In accordance with the control signal input from the control unit 102, the reception unit 104 demultiplexes, demodulates, and decodes the reception signal received from the terminal apparatus 2A through the antenna 105, and outputs information resulting from the decoding to the higher layer processing unit 101.

The radio reception unit 1041 converts, by down-converting, an uplink signal received through the transmit and/or receive antenna 105 into a baseband signal, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio reception unit 1041 removes a portion corresponding to CP from the digital signal resulting from the conversion. The radio reception unit 1041 performs Fast Fourier Transform (FFT) on the signal from which CP has been removed, extracts a signal in the frequency domain, and outputs the resulting signal to the demultiplexing unit 1042.

The demultiplexing unit 1042 demultiplexes the signal input from the radio reception unit 1041 into PUCCH, PUSCH, and the signal such as the uplink reference signal. The demultiplexing is performed based on radio resource allocation information that is determined in advance by the base station apparatus 1A using the radio resource control unit 1011 and that is included in the uplink grant notified to each of the terminal apparatuses 2.

Furthermore, the demultiplexing unit 1042 makes a compensation of channels including PUCCH and PUSCH. The demultiplexing unit 1042 demultiplexes the uplink reference signal.

The demodulation unit 1043 performs Inverse Discrete Fourier Transform (IDFT) on PUSCH, acquires modulation symbols, and performs reception signal demodulation, that is, demodulates each of the modulation symbols of PUCCH and PUSCH, in compliance with the modulation scheme prescribed in advance, such as BPSK, QPSK, 16QAM, 64QAM, 256QAM, or the like, or in compliance with the modulation scheme that the base station apparatus 1A itself notified in advance, with the uplink grant, to each of the terminal apparatuses 2.

The decoding unit 1044 decodes the coded bits of PUCCH and PUSCH, which have been demodulated, at the coding rate in compliance with a coding scheme prescribed in advance, the coding rate being prescribed in advance or being notified in advance with the uplink grant to the terminal apparatus 2 by the base station apparatus 1A itself, and outputs the decoded uplink data and uplink control information to the higher layer processing unit 101. In a case that PUSCH is re-transmitted, the decoding unit 1044 performs the decoding with the coded bits input from the higher layer processing unit 101 and retained in an HARQ buffer, and the demodulated coded bits.

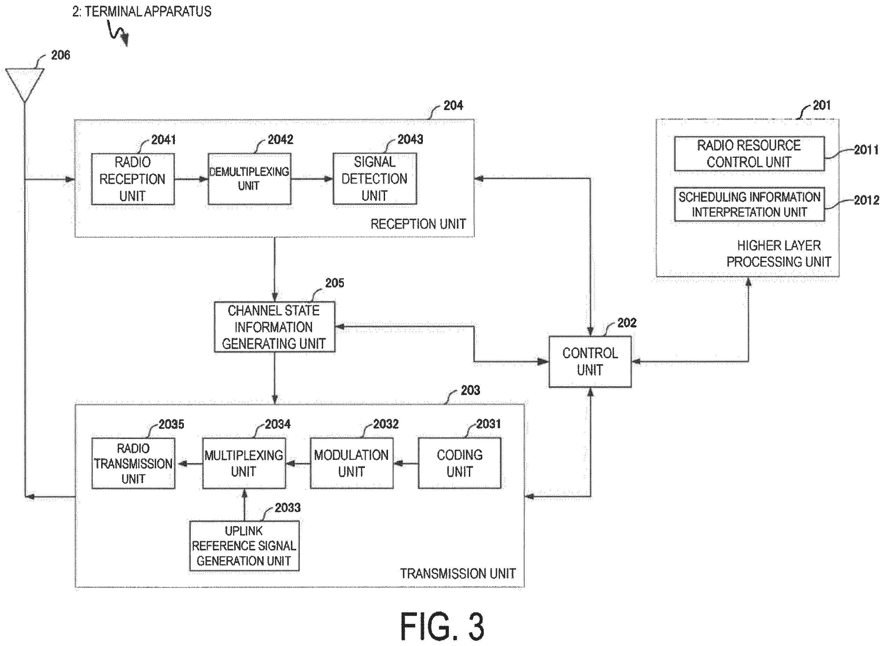

FIG. 3 is a schematic block diagram illustrating a configuration of each terminal apparatus 2 (terminal apparatus 2A and terminal apparatus 2B) according to the present embodiment. As illustrated in FIG. 3, the terminal apparatus 2A is configured, including a higher layer processing unit (higher layer processing step) 201, a control unit (controlling step) 202, a transmission unit (transmitting step) 203, a reception unit (receiving step) 204, a channel state information generating unit (channel state information generating step) 205, and an antenna 206. The higher layer processing unit 201 is configured, including a radio resource control unit (radio resource controlling stop) 2011 and a scheduling information interpretation unit (scheduling information interpreting step) 2012. The transmission unit 203 is configured, including a coding unit (coding step) 2031, a modulation unit (modulating step) 2032, an uplink reference signal generation unit (uplink reference signal generating step) 2033, a multiplexing unit (multiplexing step) 2034, and a radio transmission unit (radio transmitting step) 2035. The reception unit 204 is configured, including a radio reception unit (radio receiving step) 2041, a demultiplexing unit (demultiplexing step) 2042, and a signal detection unit (signal detecting step) 2043.

The higher layer processing unit 201 outputs the uplink data (the transport block) generated by a user operation or the like, to the transmission unit 203. The higher layer processing unit 201 performs processing of the Medium Access Control (MAC) layer, the Packet Data Convergence Protocol (PDCP) layer, the Radio Link Control (RLC) layer, and the Radio Resource Control (RRC) layer.

The higher layer processing unit 201 outputs, to the transmission unit 203, information indicating a terminal apparatus function supported by the terminal apparatus 2A itself.

Furthermore, the radio resource control unit 2011 manages various configuration information of the terminal apparatuses 2A itself. Furthermore, the radio resource control unit 2011 generates information to be mapped to each uplink channel, and outputs the generated information to the transmission unit 203.

The radio resource control unit 2011 acquires configuration information of CSI feedback transmitted from the base station apparatus, and outputs the acquired information to the control unit 202.

The scheduling information interpretation unit 2012 interprets the downlink control information received through the reception unit 204, and determines scheduling information. The scheduling information interpretation unit 2012 generates the control information in order to control the reception unit 204 and the transmission unit 203 in accordance with the scheduling information, and outputs the generated information to the control unit 202.

On the basis of the information input from the higher layer processing unit 201, the control unit 202 generates a control signal for controlling the reception unit 204, the channel state information generating unit 205, and the transmission unit 203. The control unit 202 outputs the generated control signal to the reception unit 204, the channel state information generating unit 205, and the transmission unit 203 to control the reception unit 204 and the transmission unit 203.

The control unit 202 controls the transmission unit 203 to transmit CSI generated by the channel state information generating unit 205 to the base station apparatus.

In accordance with the control signal input from the control unit 202, the reception unit 204 demultiplexes, demodulates, and decodes a reception signal received from the base station apparatus 1A through the antenna 206, and outputs the resulting information to the higher layer processing unit 201.

The radio reception unit 2041 converts, by down-converting, a downlink signal received through the antenna 206 into a baseband signal, removes unnecessary frequency components, controls an amplification level in such a manner as to suitably maintain a signal level, performs orthogonal demodulation based on an in-phase component and an orthogonal component of the received signal, and converts the resulting orthogonally-demodulated analog signal into a digital signal.

The radio reception unit 2041 removes a portion corresponding to CP from the digital signal resulting from the conversion, performs fast Fourier transform on the signal from which CP has been removed, and extracts a signal in the frequency domain.

The demultiplexing unit 2042 demultiplexes the extracted signal into PHICH, PDCCH, EPDCCH, PDSCH, and the downlink reference signal. Further, the demultiplexing unit 2042 makes a compensation of channels including PHICH, PDCCH, and EPDCCH based on a channel estimation value of the desired signal obtained from the channel measurement, detects the downlink control information, and outputs the information to the control unit 202. The control unit 202 outputs PDSCH and the channel estimation value of the desired signal to the signal detection unit 2043.

The signal detection unit 2043, using PDSCH and the channel estimation value, detects a signal, and outputs the detected signal to the higher layer processing unit 201.

The transmission unit 203 generates the uplink reference signal in accordance with the control signal input from the control unit 202, codes and modulates the uplink data (the transport block) input from the higher layer processing unit 201, multiplexes PUCCH, PUSCH, and the generated uplink reference signal, and transmits a result of the multiplexing to the base station apparatus 1A through the antenna 206.

The coding unit 2031 codes the uplink control information input from the higher layer processing unit 201 in compliance with a coding scheme, such as convolutional coding or block coding. Furthermore, the coding unit 2031 performs turbo coding in accordance with information used for the scheduling of PUSCH.

The modulation unit 2032 modulates coded bits input from the coding unit 2031, in compliance with the modulation scheme notified with the downlink control information, such as BPSK, QPSK, 16QAM, or 64QAM, or in compliance with a modulation scheme prescribed in advance for each channel.

The uplink reference signal generation unit 2033 generates a sequence acquired according to a rule (formula) prescribed in advance, based on a physical cell identity (PCI, also referred to as a Cell ID or the like) for identifying the base station apparatus 1A, a bandwidth to which the uplink reference signal is mapped, a cyclic shift notified with the uplink grant, a parameter value for generation of a DMRS sequence, and the like.

In accordance with the control signal input from the control unit 202, the multiplexing unit 2034 rearranges modulation symbols of PUSCH in parallel and then performs Discrete Fourier Transform (DFT) on the rearranged modulation symbols. Furthermore, the multiplexing unit 2034 multiplexes PUCCH and PUSCH signals and the generated uplink reference signal for each transmit antenna port. To be more specific, the multiplexing unit 2034 maps the PUCCH and PUSCH signals and the generated uplink reference signal to the resource elements for each transmit antenna port.

The radio transmission unit 2035 performs Inverse Fast Fourier Transform (IFFT) on a signal resulting from the multiplexing, performs the modulation of SC-FDMA scheme, generates an SC-FDMA symbol, attaches CP to the generated SC-FDMA symbol, generates a baseband digital signal, converts the baseband digital signal into an analog signal, removes unnecessary frequency components, up-converts a result of the removal into a signal of a carrier frequency, performs power amplification, and outputs a final result to the transmit and/or receive antenna 206 for transmission.

The signal detection unit 2043 according to the present embodiment is capable of performing demodulation processing, based on information related to a multiplexed state of a transmit signal addressed to the base station apparatus itself and information related to a retransmitted state of a transmit signal addressed to the base station apparatus itself.

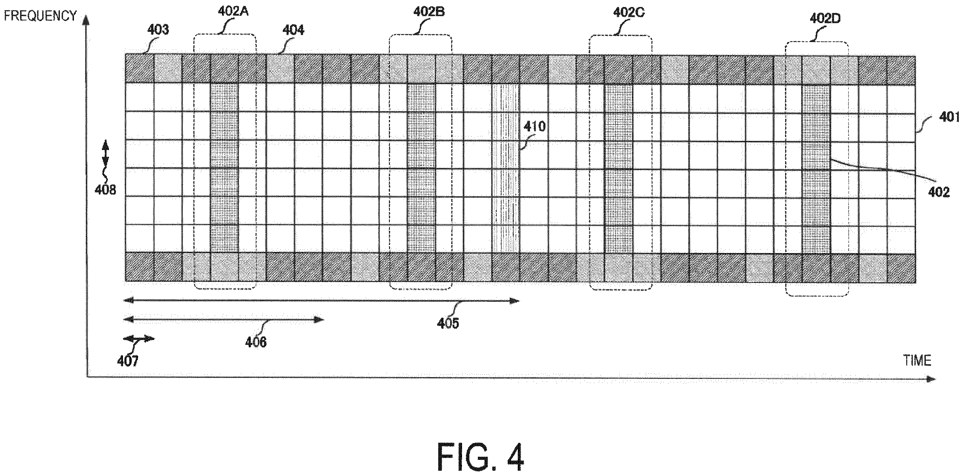

FIG. 4 is a schematic diagram illustrating an example of a frame format for uplink transmission according to the present embodiment. As illustrated in FIG. 4, the frame format for uplink transmission according to the present embodiment includes at least a PUSCH resource 401, a DMRS resource 402 associated with the PUSCH, a PUCCH resource 403, a DMRS resource 404 associated with the PUCCH, and an SRS resource 410. In the following description, the DMRS unless otherwise specified indicates a DMRS associated with the PUSCH. In addition, the frame format is managed by a subframe length 405 (or subframe cycle), a slot length 406 (or slot cycle), a symbol length 407 (or symbol cycle and SC-FDMA symbol length), and an RB bandwidth 408 (or the number of RB subcarriers). For example, the subframe cycle is 1 ms, and the slot cycle 406 is 0.5 ms. Note that one subframe includes 14 SC-FDMA symbols, and one slot includes seven SC-FDMA symbols. The RB band width is 180 kHz. Although in the example of FIG. 4, the system bandwidth is about 1.4 MHz for eight RBs, the communication method according to the present embodiment is not limited by the system bandwidth. Note that numeric values of the subframe cycle, the slot cycle, the number of symbols in one subframe/slot, and the RB bandwidth are merely provided as an example, and may be values different from the above. Further, DMRS groups included in each of the slots are also referred to as DMRS groups 402A, 402B, 402C, and 402D.

The terminal apparatuses 2 allocate data signals, control signals, and the DMRSs to be transmitted by the terminal apparatuses themselves to the base station apparatus 1A to the specified resources, based on scheduling information or the like transmitted from the base station apparatus 1A. Note that the PUCCH resource 403 and the DMRS resource 404 associated with the PUCCH are prepared at both ends of the system bandwidth, but time when the terminal apparatuses 2 transmit the PUCCH and the DMRSs associated with the PUCCH is not limited to the example of FIG. 4. The positions and bandwidths of the SC-FDMA symbols including the PUCCH resource 403 and the DMRS resource 404 associated with the PUCCH are associated with a format type of the PUCCH notified by the base station apparatus 1A to the terminal apparatuses 2. The terminal apparatuses 2 can transmit the PUSCH and the PUCCH simultaneously. Furthermore, the terminal apparatuses 2 can be configured so as to be unable to transmit the PUSCH and the PUCCH simultaneously.

The SRS resource 410 can be included in the last SC-FDMA symbol of each of the subframes. Note that the SRS resource 410 may not be included in all the subframes. Note that each of the terminal apparatuses 2 does not always need to transmit the SRSs in all the resources prepared as the SRS resources 410, and for example, each of the terminal apparatuses 2 can also transmit the SRS in a resource individually notified from the base station apparatus 1A. The subframe numbers or the like of the subframe including the SRS resource 410 are notified from the base station apparatus 1A to the terminal apparatuses 2 by higher layer signaling or the DCI. In a case that the terminal apparatuses 2 is requested from the base station apparatus 1A to transmit the SRS, the terminal apparatuses 2 can transmit the SRS in the subframe notified from the base station apparatus 1A. At this time, in the subframe to transmit the SRS, the PUSCH resource 401 is reduced to be smaller than the resource in any other subframe, so that in the subframes, the terminal apparatuses 2 can perform uplink transmission in Shortened PUSCH in which the PUSCH 401 resources is smaller than that in any other subframe.

The terminal apparatuses 2A and 2B can arrange uplink transmission data in the same PUSCH resource. In order to demultiplex/demodulate the transmission data of the terminal apparatuses 2A and 2B arranged in the same PUSCH resource, the base station apparatus 1A needs to estimate the Channel State Information (CSI) with each of the terminal apparatuses 2A and 2B. Thus, in the known LTE, the terminal apparatus 2A and the terminal apparatus 2B can apply cyclic shifts specific to each terminal apparatus to the DMRS signal sequences forming the DMRS groups. In a case that the frequencies of the PUSCH resources in which the transmission data of the terminal apparatuses 2A and 2B are allocated are equal to each other (in the case of Equal band allocation), the frequencies of the DMRS resources in which the DMRSs transmitted by the terminal apparatus 2A and the terminal apparatus 2B are allocated are also equal to each other. Therefore, the terminal apparatuses 2A and 2B apply the specific cyclic shifts to the DMRS sequences, whereby the base station apparatus 1A can demultiplex the DMRSs transmitted by the terminal apparatus 2A and the terminal apparatus 2B and then performs channel estimation for the DMRSs. However, in the above method, the data multiplexing method of the terminal apparatus 2A and the terminal apparatus 2B is limited to Equal band allocation.

In the known LTE-A, the terminal apparatus 2A and the terminal apparatus 2B can spread the DMRSs by using an Orthogonal cover code (OCC) in the time direction. In an example of FIG. 4, the terminal apparatus 2A can transmit, as the DMRS group 402A and the DMRS group 402B, sequences obtained by spreading the DMRS sequences to which the specific cyclic shifts are applied with use of the OCC of spreading factor 2. The base station apparatus applies despreading to the DMRS group 402A and the DMRS group 402B with use of the OCCs allocated to the terminal apparatus 2A and the terminal apparatus 2B, and thus the base station apparatus can demultiplex the DMRSs, even in a case that only part of the transmission data of the terminal apparatuses 2A and 2B is allocated in the same PUSCH resource (in the case of Unequal band allocation).

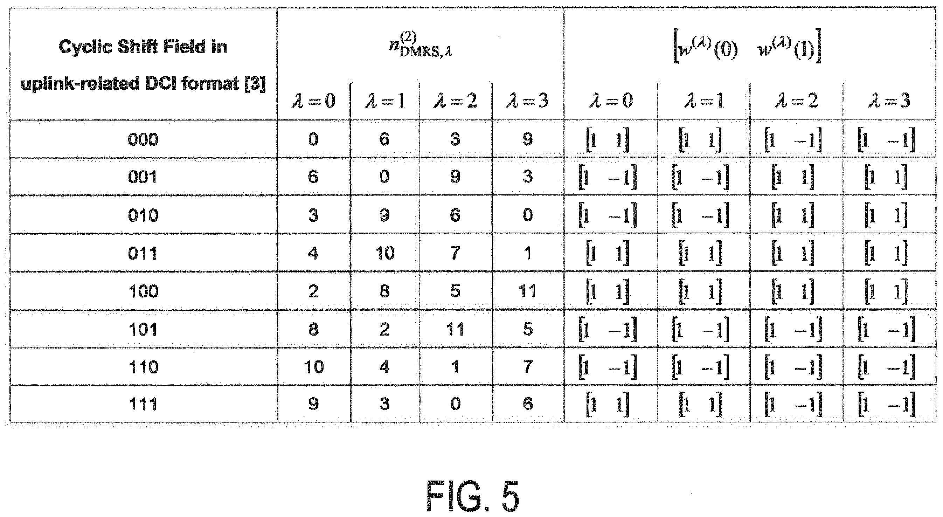

FIG. 5 is a table illustrating an allocation example of the cyclic shift quantities applied to the DMRSs and the OCCs used for spreading in the time direction. In FIG. 5, a first column indicates a value of a cyclic shift field of a corresponding DCI format, second to fifth columns indicate values indicating the cyclic shift quantities applied to the DMRSs transmitted in the respective layers, and sixth to ninth columns indicate values indicating the OCC sequences provided to the DMRSs transmitted in the respective layers. The terminal apparatus 2A and the terminal apparatus 2B can know the cyclic shift quantities applied by the terminal apparatuses themselves to the DMRS sequences and the OCC sequences, based on the value of the cyclic shift field of the corresponding DCI format. Hereinafter, information including: at least one of information representing the cyclic shift quantities applied by the terminal apparatuses 2 to the DMRSs; and information representing the OCC sequences provided by the terminal apparatuses 2 to the DMRSs is also referred to as DMRS configuration information. Note that the DMRS configuration information may include other information. The DMRS configuration information can be notified from the base station apparatus 1A to each of the terminal apparatuses 2 by higher layer signaling or the DCI. In addition, part of the information related to the DMRS configuration information (e.g., a table in which information bits described in the DCI and the OCC sequences are associated with each other, or the like) can be configured in advance in the terminal apparatuses 2. However, according to the example of FIG. 5, the OCC spreading factor is 2, so that the number of terminal apparatuses multiplexed in Unequal band allocation is limited to 2.

Therefore, the terminal apparatuses 2 according to the present embodiment can spread the DMRSs in time direction by using the OCCs of spreading factor 4. The terminal apparatuses 2 can transmit, as the DMRS groups 402A, 402B, 402C, and 402D, the sequences obtained by spreading the DMRS sequences to which the specific cyclic shifts are applied, with use of the OCCs of spreading factor 4. Types of the OCCs used by the terminal apparatuses 2 according to the present embodiment are not limited to a specific type. For example, the terminal apparatuses 2 can use Walsh code or OVSF code as the OCC. For example, the terminal apparatus 2A can use [1, 1, 1, 1] as the OCC. The terminal apparatus 2B can use [1, -1, 1, -1] as the OCC. The terminal apparatus 2C can use [1. 1. -1. -1] as the OCC. The terminal apparatus 2D can use [1, -1, -1, 1] as the OCC. The terminal apparatuses 2 thus spread the DMRSs in time direction and transmit the spread DMRSs, and the base station apparatus 1A according to the present embodiment can thereby demultiplex the DMRSs that are transmitted from three or more terminal apparatuses 2 and multiplexed in Unequal band allocation. Note that each of the terminal apparatuses 2 spreads the DMRSs in the time direction over four subframes with use of the OCC of spreading factor 8, and the base station apparatus 1A can thereby demultiplex the DMRSs transmitted by a maximum of eight terminal apparatuses 2.

The base station apparatus 1A, as in FIG. 5, can notify or indicate, to each of the terminal apparatuses 2, the OCC sequence used in DMRS time spreading, in association with the cyclic shift quantities applied to the DMRSs. Further, the base station apparatus 1A can notify the terminal apparatuses 2 of the OCC sequences used in DMRS time spreading, in association with the cyclic shift quantities applied to the DMRSs, based on an existing DCI format. For example, the base station apparatus 1A and the terminal apparatuses 2 can predetermine which of the OCC sequences used by the terminal apparatuses 2 in DMRS time spreading is indicated by the information indicating the cyclic shift quantities applied by the terminal apparatuses 2 to the DMRSs. According to the control in this manner, the terminal apparatuses 2 acquire the information indicating the cyclic shift quantities applied by the uplink reference signal generation unit 2033 to the DMRSs, the information being notified from the base station apparatus 1A, and thus can know the OCC sequences used by the uplink reference signal generation unit 2033 in DMRS time spreading. Further, the base station apparatus 1A can notify the terminal apparatuses 2 of the OCC sequences used in DMRS time spreading, in association with the cyclic shift quantities applied to the DMRSs, based on a new DCI format. For example, the new DCI format, as in the known DCI format, includes a field for describing the information indicating the cyclic shift quantities applied to the DMRSs, but the DCI format can further include a new field which does not exist in the existing DCI format (e.g., the number of subframes in which scheduling information continues, or the like). Furthermore, the new DCI format can include, in different bit sizes, the field included in the existing DCI format.

In a case that the base station apparatus 1A notifies the OCC sequences to the terminal apparatuses 2 in DCI, the base station apparatus 1A can notify the OCC sequences with different spreading factors from each other in the DCI. According to the example of FIG. 5, the information for notifying the phase rotation quantity described in the DCI format, the information relating to OCC sequences notified to each of the terminal apparatuses 2, is limited to the sequences of spreading factor 2. The base station apparatus 1A according to the present embodiment can notify, among Y items of information capable of notifying the phase rotation quantity described in the DCI format of X bits, y OCC sequences of spreading factor 2 and the remaining (Y-y) OCC sequences of spreading factor 4.

The base station apparatus 1A can notify each of the terminal apparatuses 2 of the cyclic shift quantities applied to the DMRSs and the OCC sequences used in DMRS time spreading, based on the new DCI format. In this case, the new DCI format can include a field for describing the information indicating the cyclic shift quantities applied to the DMRSs, and a field for describing the information indicating the OCC sequences used in DMRS time spreading. Further, in a case that the length of an OCC sequence is 4 (in a case that the base station apparatus is indicated that the length of an OCC sequence is 4), the terminal apparatuses 2 can acquire the cyclic shift quantities and the OCC sequence by referring to a different table from the table for a case of the length of an OCC sequence being 2. For example, the base station apparatus 1A can indicate to the terminal apparatuses 2 whether the length of the OCC sequence is 2 or 4 by higher layer or physical layer signaling.

The terminal apparatuses 2 according to the present embodiment determine a method for transmitting the DMRSs to be transmitted over multiple subframes, based on the DMRS configuration information notified from the base station apparatus 1A. Therefore, it is also possible to say that the base station apparatus 1A notifies the terminal apparatuses 2 of the DMRS configuration information of the DMRSs transmitted in multiple subframes. It is desirable that the multiple subframes be continuous subframes. The uplink reference signal generation unit 2033 of each of the terminal apparatuses 2 generates the DMRSs based on the DMRS configuration information acquired by the reception unit 204, and the transmission unit 203 transmits an uplink signal including the generated DMRSs. Furthermore, in a case that the DMRSs are transmitted in multiple subframes, the terminal apparatuses 2 can transmit the DMRSs without transmitting the PUSCH in some of the subframes.

As the terminal apparatuses 2 included in the communication system according to the present embodiment, the terminal apparatuses corresponding to the different releases of LTE standards can coexist. For example, the terminal apparatuses 2 according to the present embodiment includes a first terminal apparatus that can spread the DMRS in the time direction with use of the OCC of spreading factor 4, a second terminal apparatus that can spread the DMRS in the time direction with use of the OCC of spreading factor 2, and a third terminal apparatus that cannot spread the DMRS in the time direction.

In a case that the base station apparatus 1A according to the present embodiment multiplexes the first terminal apparatus and the third terminal apparatus in Unequal band allocation, the base station apparatus 1A can allocate any one of [1, -1, 1, -1], [1, 1, -1, -1], and [1, -1, -1, 1] as the OCC to the first terminal apparatus, on the assumption that [1, 1, 1, 1] is allocated as the OCC to the third terminal apparatus that cannot perform spreading with the an OCC. The base station apparatus 1A can apply despreading processing to the DMRS groups 402A to 402D with use of the OCC allocated to the first terminal apparatus, to thereby demultiplex the DMRSs transmitted by the first terminal apparatus. The base station apparatus 1A can apply averaging processing in the time direction to the DMRS groups 402A to 402D, to thereby demultiplex the DMRSs transmitted by the third terminal apparatus. In other words, backward compatibility can be maintained.

In a case that the base station apparatus 1A according to the present embodiment multiplexes the first terminal apparatus and the second terminal apparatus in Unequal band allocation, and the base station apparatus 1A has allocated [1, 1] as the OCC to the second terminal apparatus, the base station apparatus 1A can allocate either [1, -1, 1, -1] or [1, -1, -1, 1] as the OCC to the first terminal apparatus. On the other hand, in a case that the base station apparatus 1A has allocated [1, -1] as the OCC to the second terminal apparatus, the base station apparatus 1A can allocate either [1, 1, 1, 1] or [1, 1, -1, -1] as the OCC to the first terminal apparatus. Note that the base station apparatus 1A can keep the OCC allocated to the second terminal apparatus unchanged within two subframes. The base station apparatus 1A can apply despreading processing to the DMRS groups 402A to 402D with use of the OCC allocated to the first terminal apparatus, to thereby demultiplex the DMRSs transmitted by the first terminal apparatus. The base station apparatus 1A can apply despreading processing to each of the DMRS groups 402A and 402B and each of the DMRS groups 402C and 402D with use of the OCC allocated to the second terminal apparatus, to thereby demultiplex the DMRS transmitted by the second terminal apparatus.

In a case that the base station apparatus 1A according to the present embodiment multiplexes the first terminal apparatus, the second terminal apparatus, and the third terminal apparatus in Unequal band allocation, the base station apparatus 1A can allocate [1, -1] as the OCC to the second terminal apparatus. In addition, the base station apparatus 1A can allocate [1, 1, -1, -1] as the OCC to the first terminal apparatus. The base station apparatus 1A can apply despreading processing to the DMRS groups 402A to 402D with use of the OCC allocated to the first terminal apparatus, to thereby demultiplex the DMRSs transmitted by the first terminal apparatus. The base station apparatus 1A can apply despreading processing to each of the DMRS groups 402A and 402B and the DMRS groups 402C and 402D with use of the OCC allocated to the second terminal apparatus, to thereby demultiplex the DMRSs transmitted by the second terminal apparatus. The base station apparatus 1A can apply averaging processing in the time direction to the DMRS groups 402A to 402D, to thereby demultiplex the DMRSs transmitted by the third terminal apparatus.

Note that in the above description, the terminal apparatuses 2 spread the DMRSs with use of the OCCs in the time direction, to configure the DMRSs transmitted by the multiple terminal apparatuses 2 into the orthogonal state. The base station apparatus 1A according to the present embodiment can perform time division multiplexing on the DMRSs transmitted by respective terminal apparatuses 2. The base station apparatus 1A can notify each of the terminal apparatuses 2 of the subframe position and the slot position from which the DMRS can be transmitted. In an example of FIG. 4, the base station apparatus 1A can indicate for the terminal apparatus 2A that the DMRS is to be transmitted in the resources indicated by the DMRS group 402A. Similarly, the base station apparatus 1A can indicate that the DMRS is to be transmitted in the resources indicated by the DMRS group 402B to the terminal apparatus 2B, in the resources indicated by the DMRS group 402C to the terminal apparatus 2C, and in the resources indicated by the DMRS group 402D to the terminal apparatus 2D. According to the control in this manner, the base station 1A can configure the DMRSs transmitted by the multiple terminal apparatuses 2 into the orthogonal state. In this case, the base station apparatus 1A includes, as the DMRS configuration information, the information indicating the positions of the DMRSs transmitted in at least two or more subframes. The information indicating the positions of the DMRSs includes at least one of the subframe numbers of the subframes including the DMRSs, the slot numbers of the slots including the DMRSs, and the SC-FDMA symbol numbers of the SC-FDMA symbols including the DMRSs.

According to the method described above, the base station apparatus 1A is capable of spatially multiplexing three or more terminal apparatuses in Unequal band allocation while maintaining backward compatibility, so that frequency efficiency of the communication system can be improved.

### 2. Second Embodiment

In the method of the first embodiment, the terminal apparatuses 2 transmit the DMRSs by time division multiplexing or OCC code division multiplexing over multiple subframes, and the base station apparatus 1A thereby demultiplexes the DMRS transmitted by each of the terminal apparatuses 2. The present embodiment describes a case where all of the DMRSs associated with the PUCCHs, multiplexed in the uplink MU-MIMO are transmitted in one subframe. Note that an equipment configuration of the base station apparatus 1A and the terminal apparatuses 2 according to the present embodiment is similar to that of the first embodiment and thus a description is not given here.

The terminal apparatuses 2 according to the present embodiment can transmit the DMRSs having the comb-teeth-shaped signal spectra. The uplink reference signal generation unit 2033 of each of the terminal apparatuses 2 can generate the DMRSs having the comb-teeth-shaped signal spectra by repeating a prescribed sequence in the time direction multiple times. For example, the DMRS of T (seconds) in symbol length generated by the uplink reference signal generation unit 2033 repeating the prescribed sequence of length M in the time direction N times (N is a natural number expressed by power of 2) is obtained as the comb-teeth-shaped signal spectra in which an interval of comb teeth (an interval of signal spectra) is N/T (Hz). Note that in the following description, the spectra of the signals generated by the above method are referred to as the comb-teeth-shaped spectra, but this does not always indicate that signal spectra are formed in the shape of comb teeth. In the present embodiment, the signals having the comb-teeth-shaped signal spectra include signals that are allocated for every N (>1) subcarriers on a frequency axis. In addition, in the present embodiment, means for generating the comb-teeth-shaped signal spectra is not limited to the above method.

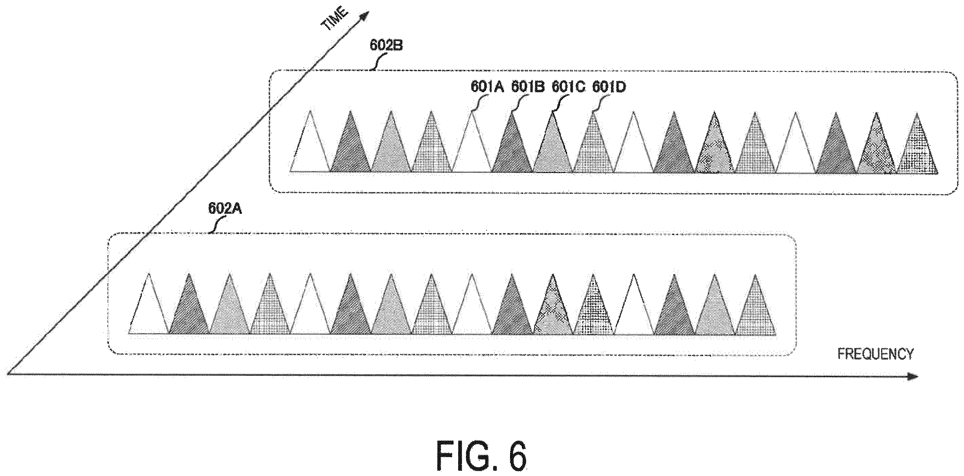

FIG. 6 is a schematic diagram illustrating an example of the DMRS transmission method according to the present embodiment. For the sake of simplicity, only one RB of the DMRS resources associated with the PUSCH is extracted and illustrated, compared to FIG. 4. Spectra 601A to 601D indicate the DMRSs that are transmitted by the terminal apparatuses 2A to 2D, respectively. Further, the DMRSs that are regarded as being transmitted in the same symbol time are referred to as a DMRS group 602A and a DMRS group 602B. The time when the DMRS group 602A is transmitted is regarded as being the same as the time for the DMRS group 402A in FIG. 4, and the time when the DMRS group 602B is transmitted is regarded as being the same as the time for the DMRS group 402B in FIG. 4, and therefore the DMRS groups 602A and 602B are transmitted in the same subframe.

In FIG. 6, the uplink reference signal generation unit 2033 of each of the terminal apparatuses 2 repeats the prescribed sequence in the time direction four times. Therefore, the base station apparatus 1A can specify the positions of spectra so that the comb-teeth-shaped signal spectra generated by the respective terminal apparatuses 2 does not overlap each other, to thereby demultiplex the DMRSs transmitted by a maximum of four terminal apparatuses 2. In other words, it is also possible to say that the terminal apparatuses 2 according to the present embodiment transmit, by frequency division multiplexing, the DMRSs transmitted by the respective terminal apparatuses.

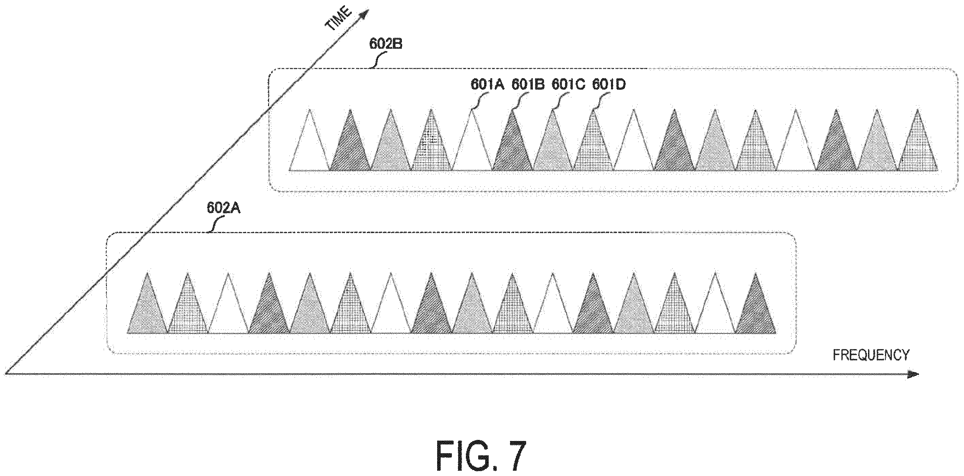

Note that, in the example of FIG. 6, the terminal apparatuses 2 transmit the DMRS twice in one subframe, and the same frequency allocation of the respective DMRSs is used in the subframe. FIG. 7 is a schematic diagram illustrating an example of the DMRS transmission method according to the present embodiment. As illustrated in FIG. 7, the terminal apparatuses 2 according to the present embodiment can also transmit the DMRSs by using different frequency allocations in the subframe.

The base station apparatus 1A can include, in the DMRS configuration information notified to the terminal apparatuses 2, information indicating the number of repetitions of the prescribed sequence (frequency interval of signal spectra of the DMRS), and information indicating the frequencies on which the DMRSs are mapped, as information (first information) for generating the DMRSs having the comb-teeth-shaped signal spectra generated by the uplink reference signal generation unit 2033 of each of the terminal apparatuses 2. Note that the uplink reference signal generation unit 2033 of each of the terminal apparatuses 2 according to the present embodiment can also apply the cyclic shift to the DMRSs having the comb-teeth-shaped signal spectra to be generated. In this case, the base station apparatus 1A can notify the terminal apparatuses 2 of the information for generating the DMRSs having the comb-teeth-shaped signal spectra, in association with the cyclic shift quantities applied to the DMRSs.

Furthermore, the terminal apparatuses 2 according to the present embodiment may additionally use code division multiplexing. By using code division multiplexing, the base station apparatus 1A according to the present embodiment can spatially multiplex, in Unequal band allocation: a fourth terminal apparatus capable of transmitting the DMRSs having the comb-teeth-shaped signal spectra; a fifth terminal apparatus not capable of transmitting the DMRSs having the comb-teeth-shaped signal spectra but capable of transmitting the DMRSs by spreading the DMRSs in the time direction by using the OCC of spreading factor 2; and a sixth terminal apparatus neither capable of transmitting the DMRSs having the comb-teeth-shaped signal spectra nor capable of transmitting the DMRSs by spreading the DMRSs in the time direction by using an OCC.

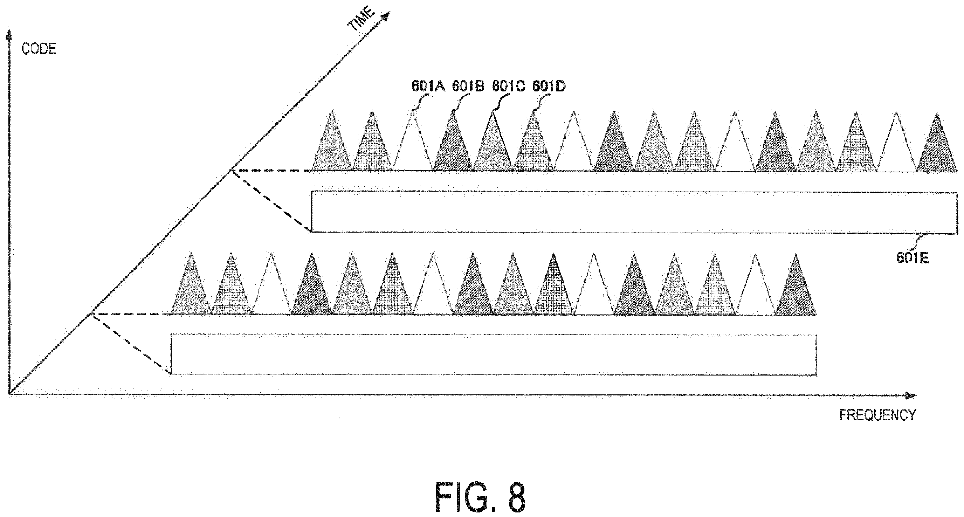

FIG. 8 is a schematic diagram illustrating an example of the DMRS transmission method according to the present embodiment. FIG. 8 illustrates a case of transmitting the DMRSs by the terminal apparatuses 2A to 2D each of which serves as the fourth terminal apparatus, and the terminal apparatus 2E which serves as the fifth terminal apparatus. In a case that the base station apparatus 1A has allocated [1, 1] as the OCC to the terminal apparatus 2E, the base station apparatus 1A can allocate [1, -1] as the OCC to the terminal apparatuses 2A to 2D. In other words, each of the terminal apparatuses 2A to 2D uses the common OCC. Note that the uplink reference signal generation unit 2033 of each of the terminal apparatuses 2A to 2D may apply time spreading to the prescribed sequence by using the OCC and thereafter repeat, multiple times, the prescribed sequence after the time spreading, to thereby generate the DMRS having the comb-teeth-shaped signal spectra. Alternatively, the uplink reference signal generation unit 2033 may first repeat the prescribed sequence multiple times to thereby generate the DMRSs having the comb-teeth-shaped signal spectra and thereafter apply time spreading to the generated DMRSs by using the OCC. Note that in a case that the base station apparatus 1A has allocated [1, -1] as the OCC to the terminal apparatus 2E, the base station apparatus 1A can allocate [1, 1] as the OCC to the terminal apparatuses 2A to 2D.

The base station apparatus 1A can apply despreading processing to the DMRSs transmitted twice in one subframe with use of the OCC, to thereby demultiplex the DMRSs to separate the DMRSs transmitted by the terminal apparatuses 2A to 2D and the terminal apparatus 2E. In addition, with respect to the DMRSs transmitted by the terminal apparatuses 2A to 2D separated by the despreading with the use of the OCC, the base station apparatus 1A can acquire the DMRSs at the frequency positions specified for respective terminal apparatuses 2, to thereby demultiplex the DMRSs transmitted by the terminal apparatuses 2A to 2D. Summarizing the above method, it is possible to say that the base station apparatus 1A according to the present embodiment achieves the orthogonality of the DMRSs among the fourth terminal apparatus capable of generating the DMRSs having the comb-teeth-shaped signal spectra and the fifth terminal apparatus not capable of generating the DMRSs having the comb-teeth-shaped signal spectra by code division multiplexing with use of the OCC, while achieving the orthogonality of the DMRSs among the fourth terminal apparatuses by frequency division multiplexing. Note that in a case that the base station apparatus 1A spatially multiplexes the fourth terminal apparatus and the sixth terminal apparatus in Unequal band allocation, the base station apparatus 1A can allocate [1, -1] as the OCC to the fourth terminal apparatus, on the assumption that [1, 1] is allocated as the OCC to the sixth terminal apparatus.

Note that in a case that frequency division multiplexing and code division multiplexing are used simultaneously, the base station apparatus 1A preferably indicates for the terminal apparatuses 2 to allocate, in the same subframe, the signal spectra of the DMRSs transmitted by the terminal apparatuses 2 to the same position, as illustrated in FIG. 8. However, in a case that channel frequency selectivity in the RB is sufficiently small or the like, the base station apparatus 1A does not always need to indicate for the terminal apparatuses 2 to allocate the signal spectra of the DMRSs are to the same position in the same subframe.

The base station apparatus 1A can include, in the DMRS configuration information to be notified to the terminal apparatuses 2, the information indicating the OCC sequence used by the uplink reference signal generation unit 2033 in DMRS time spreading, as the information for generating the DMRSs having the comb-teeth-shaped signal spectra generated by the uplink reference signal generation unit 2033 of each of the terminal apparatuses 2. Further, the base station apparatus 1A can notify the terminal apparatuses 2 of the information for generating the DMRSs having the comb-teeth-shaped signal spectra, in association with the cyclic shift quantities applied to the DMRSs.

In the example of FIG. 4, the resources on which the terminal apparatuses 2 transmit the DMRSs are always at a center of a time slot. For example, in a case that the time slot includes seven SC-FDMA symbols, the DMRSs are included in fourth and eleventh SC-FDMA symbols among 14 SC-FDMA symbols transmitted in one subframe (refer to FIG. 4). The terminal apparatuses 2 according to the present embodiment can include the DMRSs in the SC-FDMA symbols other than the fourth and eleventh SC-FDMA symbols as well.

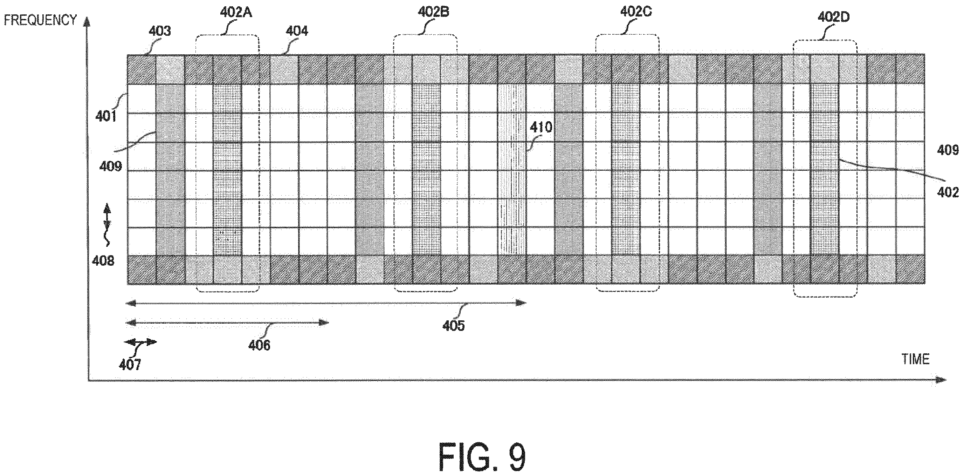

FIG. 9 is a schematic diagram illustrating an example of a frame format for uplink transmission according to the present embodiment. As illustrated in FIG. 9, in the present embodiment, some of the resources that are the PUSCH resources 401 in FIG. 4 are used as DMRS resources 409. Note that, in the example of FIG. 9, the DMRS resources 409 are included in second and ninth SC-FDMA symbols in a subframe, but the base station apparatus 1A can notify, by higher layer signaling or the DCI, the terminal apparatuses 2 of the subframe numbers of the subframes including the DMRS resources 409, the slot numbers of the slots including the DMRS resources 409, the positions of the SC-FDMA symbols including the DMRS resources 409, the cycle of the DMRS resources 409, the cyclic shift quantities applied to the DMRSs transmitted in the DMRS resources 409, the OCC applied to the DMRSs transmitted in the DMRS resources 409, the number and positions of the comb teeth of the signal spectra of the DMRSs transmitted in the DMRS resources 409, and the like.

According to the frame format illustrated in FIG. 9, one subframe can include four SC-FDMA symbols including the DMRSs. For example, the base station apparatus 1A can notify each of the terminal apparatuses 2 of any one of the OCCs of spreading factor 4, so that the terminal apparatuses 2 can spread the DMRSs to be transmitted by the terminal apparatus themselves in the time direction by using the OCC notified from the base station apparatus 1A over the four SC-FDMA symbols in one subframe and transmit the spread DMRSs. The base station apparatus 1A can apply despreading processing, based on the OCC notified to each of the terminal apparatuses 2, over the four SC-FDMA symbols in one subframe, to thereby demultiplex the DMRSs transmitted by respective terminal apparatuses 2. Note that, for the terminal apparatuses 2, in a subframe in which the DMRS resources 409 are allocated, the PUSCH resources 401 is reduced to be smaller than the that of other subframes, so that in the subframe, the terminal apparatuses 2 can transmit the uplink signal in Shortened PUSCH.

Furthermore, the terminal apparatuses 2 can transmit the DMRSs having the comb-teeth-shaped signal spectra in the DMRS resources 409. For example, the uplink reference signal generation unit 2033 of each of the terminal apparatuses 2 generates the DMRSs in which signal spectra are allocated for every N subcarriers, and the terminal apparatus 2 transmit the generated DMRSs in such a manner that the signal spectra of the generated DMRSs do not overlap the signal spectra of the DMRSs transmitted in the DMRS resources 409 by other terminal apparatuses 2 according to the frequency allocation notified from the base station apparatus 1A. The base station apparatus 1A can thereby demultiplex the DMRSs transmitted in the DMRS resources 409 by a maximum of N terminal apparatuses 2.

The resources used as the DMRS resources 409 may also be resources of channels other than the PUSCH (e.g., DMRS resources 402, PRACH resources, or the like). The base station apparatus 1A can notify the terminal apparatuses 2 of the information related to the DMRS resources 409 to allocate the DMRS resources 409 so as not to overlap the resources of channels other than the PUSCH. Note that in a case that the DMRS resources 409 overlap the resources of channels other than the PUSCH, the base station apparatus 1A can notify the terminal apparatuses 2 of the information indicating how to interpret the resources by higher layer or physical layer signaling. For example, in the case that the DMRS resources 409 overlap the resources of channels other than the PUSCH, the base station apparatus 1A can notify the terminal apparatuses 2 that such resources are to be interpreted as the DMRS resources 409. Note that the above interpretation method can be configured in advance in the terminal apparatuses 2.

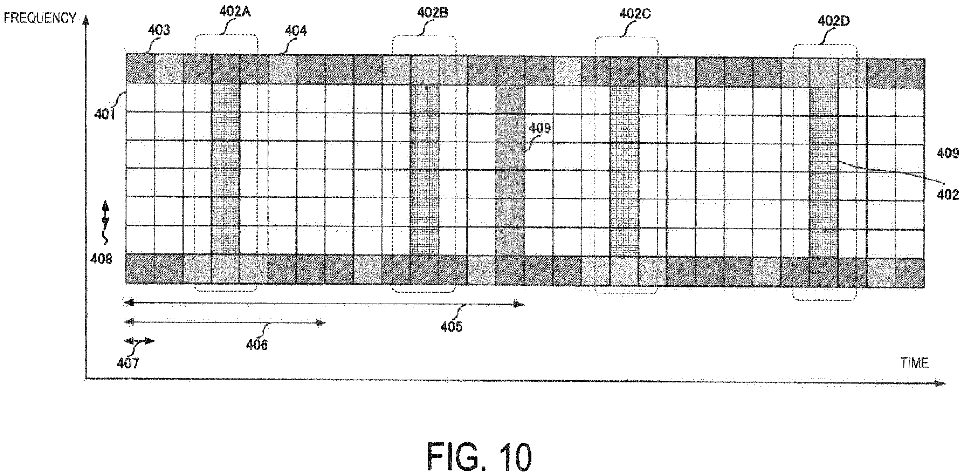

FIG. 10 is a schematic diagram illustrating an example of a frame format for uplink transmission according to the present embodiment according to the present embodiment. In FIG. 10, a resource that is the SRS resource in FIG. 4 (e.g., the last SC-FDMA symbol of a subframe) is used as the DMRS resource 409. The terminal terminals 2 can transmit the DMRSs in the DMRS resource 409. Furthermore, the terminal apparatuses 2 can transmit the DMRSs having the comb-teeth-shaped signal spectra in the DMRS resource 409. For example, the uplink reference signal generation unit 2033 of each of the terminal apparatuses 2 generates the DMRSs in which signal spectra are allocated for every N subcarriers, and the terminal apparatus 2 transmit the generated DMRSs in such a manner that the signal spectra of the generated DMRSs do not overlap the signal spectra of the DMRSs transmitted in the DMRS resources 409 by other terminal apparatuses 2 according to the frequency allocation notified from the base station apparatus 1A. The base station apparatus 1A can thereby demultiplex the DMRSs transmitted in the DMRS resources 409 by a maximum of N terminal apparatuses 2. Further, the base station apparatus 1A can indicate for the terminal apparatuses 2 to transmit the DMRSs having the comb-teeth-shaped signal spectra. At this time, the base station apparatus 1A can indicate the number of comb teeth of the DMRSs and the resources to which the DMRSs are to be allocated. The terminal apparatuses 2 transmit the comb-teeth-shaped DMRSs in a case that the terminal apparatuses are indicated by the base station apparatus 1A to transmit the comb-teeth-shaped DMRSs. In a case that the base station apparatus 1A indicates resources to which the DMRSs are to be allocated, the terminal apparatuses 2 transmit the DMRSs with the prescribed number of comb teeth in the indicated resources. Furthermore, the base station apparatus 1A can configure the DMRS demultiplexed with use of the OCC and the DMRS having the comb-teeth-shaped signal spectra at the same time or in a separated manner.

The base station apparatus 1A can notify the terminal apparatuses 2 of the information indicating the subframe numbers of the subframe to which the DMRS resources 409 are allocated. Note that the terminal apparatuses 2 according to the present embodiment can also transmit the SRSs in the resources in which the DMRS resources 409 are allocated in FIG. 10. The base station apparatus 1A can notify the terminal apparatuses 2 of the information indicating the resources in which the terminal apparatuses 2 transmit the SRSs. Therefore, in a case that the resources are resources in which the terminal apparatuses 2 transmit the SRSs, the base station apparatus 1A can notify the terminal apparatuses 2 by higher layer signaling and DCI so as not to transmit the DMRSs in the resources. Of course, in the case that the resources are the resources in which the terminal apparatuses 2 transmit the SRSs, the terminal apparatuses 2 can also be configured in advance so as not to transmit the DMRSs in the resources.

The terminal apparatuses 2 can determine which transmission is to be prioritized, in a case that both of SRS transmission and DMRS transmission are configured by the base station apparatus 1A, in the resources in which the DMRS resources 409 are allocated in FIG. 10. In the case that both of SRS transmission and DMRS transmission are configured by the base station apparatus 1A in the resources in which the DMRS resources 409 are allocated in FIG. 10, the terminal apparatuses 2 can be configured by the base station apparatus 1A with respect to which transmission is to be prioritized. Furthermore, which transmissions is to be prioritized may be determined in advance in a specification or the like. For example, in a case that SRS transmission and DMRS transmission collide with one another, the terminal apparatuses 2 can prioritize the DMRS transmission.

The terminal apparatuses 2 can be configured independently by the base station apparatus 1A with a cycle of the subframes in which the SRS resources 410 are allocated and a cycle of the subframes in which the DMRS resources 409 are allocated. For example, the terminal apparatuses 2 periodically can transmit the SRSs in accordance with the cycle configured by the base station apparatus 1A, while transmitting the DMRSs only in a case that the terminal apparatuses themselves allocate data in the PUSCH resources 401. In a case that the subframes in which the SRS resources 410 are allocated and the subframes in which the DMRS resources 409 are allocated are the same subframes, the terminal apparatuses 2 can be configured by the base station apparatus 1A with which resource allocation is to be prioritized. In the case that the subframes in which the SRS resources 410 are allocated and the subframes in which the DMRS resources 409 are allocated are the same subframes, the terminal apparatuses 2 can be configured in advance in the specification or the like with which resource allocation is to be prioritized. Furthermore, the terminal apparatuses 2 transmit the SRSs and the DMRSs both having the comb-teeth-shaped signal spectra so as not to overlap each other in signal spectra, to thereby allow to transmit the SRSs and the DMRSs simultaneously in the same resource. In this case, the base station apparatus 1A configures the SRSs and the DMRSs to have the same number of comb teeth and to allocate to different resources. In addition, the terminal apparatuses 2 can be configured not to transmit the SRSs and the DMRSs both having the comb-teeth-shaped signal spectra in the same resource at the same timing. In other words, the base station apparatus 1A does not configure DMRS transmission to the resources in which the SRSs are transmitted. In other words, the base station apparatus 1A can configure the DMRS having the comb-teeth-shaped signal spectra, in a case that SRS transmission is not configured.

Further, the terminal apparatuses 2 can be configured with the same values of a cycle in which the SRS resources 410 are allocated and a cycle in which the DMRS resources 409 are allocated. Furthermore, the terminal apparatuses 2 can transmit the DMRSs in the DMRS resources 409 in the case of being triggered by the base station apparatus 1A.

According to the method described above, the base station apparatus 1A is capable of spatially multiplexing three or more terminal apparatuses in Unequal band allocation while maintaining backward compatibility, without applying any limitation to scheduling performed by the base station apparatus itself, so that frequency efficiency of the communication system can be improved.

### 3. Description Common to All Embodiments

Note that the base station apparatus and the terminal apparatuses according to an aspect of the present invention can be used in Radio access technology (RAT) operated in an unlicensed band without being limited to a licensed band. In addition, the RAT operated in the unlicensed band can be a Licensed-Assisted Access assisted by using the licensed band.

Further, the base station apparatus and the terminal apparatuses according to an aspect of the present invention can be used in Dual connectivity (DC) in which signals are transmitted (or received) from multiple transmission points (or multiple reception points). The base station apparatus and the terminal apparatuses can be used for communication with at least any one of multiple transmission points (or reception points) that are connected in the DC. Furthermore, the base station and the terminal apparatuses according to an aspect of the present invention can be used in Carrier Aggregation (CA) in which multiple CCs are used. The base station apparatus and the terminal apparatuses can be used only for a primary cell, can be used only for a secondary cell(s), or can be used for both of the primary cell and the secondary cell(s), among the multiple CCs targeted for the CA.

A program running on each of the base station apparatus and the terminal apparatus according to the present invention is a program (a program for causing a computer to operate) that controls a CPU and the like in such a manner as to realize the functions according to an aspect of the above-described embodiments of the present invention. The information handled by these apparatuses is temporarily held in a RAM at the time of processing, and is then stored in various types of ROMs, HDDs, and the like, and read out by the CPU as necessary to be edited and written. Here, a semiconductor medium (a ROM, a non-volatile memory card, or the like, for example), an optical recording medium (DVD, MO, MD, CD, BD, or the like, for example), a magnetic recording medium (a magnetic tape, a flexible disk, or the like, for example), and the like can be given as examples of recording media for storing the programs. In addition to realizing the functions of the above-described embodiments by performing loaded programs, functions according to an aspect of the present invention can be realized by the programs running cooperatively with an operating system, other application programs, or the like in accordance with instructions included in those programs.

In a case of delivering these programs to market, the programs can be stored in a portable recording medium, or transferred to a server computer connected via a network such as the Internet. In this case, storage devices in the server computer are also included in an aspect of the present invention. Furthermore, some or all portions of each of the terminal apparatus and the base station apparatus in the above-described embodiments may be realized as LSI, which is a typical integrated circuit. The functional blocks of the reception device may be individually realized as chips, or may be partially or completely integrated into a chip. In a case that the functional blocks are integrated into a chip, an integrated circuit control unit for controlling them is added.

The circuit integration technique is not limited to LSI, and the integrated circuits for the functional blocks may be realized as dedicated circuits or a multi-purpose processor. Furthermore, in a case that with advances in semiconductor technology, a circuit integration technology with which an LSI is replaced appears, it is also possible to use an integrated circuit based on the technology.

Note that the invention of the present patent application is not limited to the above-described embodiments. The terminal apparatus according to the invention of the present patent application is not limited to the application in the mobile station device, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

The embodiments of the invention have been described in detail thus far with reference to the drawings, but the specific configuration is not limited to the embodiments. Other designs and the like that do not depart from the essential spirit of the invention also fall within the scope of the claims.

### INDUSTRIAL APPLICABILITY

The present invention can be preferably used in a base station apparatus, a terminal apparatus, and a communication method.

The present international application claims priority based on JP 2015-252981 filed on December 25, 2015, and all the contents of JP 2015-252981 are incorporated in the present international application by reference.

### DESCRIPTION OF REFERENCE NUMERALS

1A Base station apparatus
2, 2A, 2B, 2C, 2D, 2E Terminal apparatus
101 Higher layer processing unit
1011 Radio resource control unit
1012 Scheduling unit
102 Control unit
103 Transmission unit
1031 Coding unit
1032 Modulation unit
1033 Downlink reference signal generation unit
1034 Multiplexing unit
1035 Radio transmission unit
104 Reception unit
1041 Radio reception unit
1042 Demultiplexing unit
1043 Demodulation unit
1044 Decoding unit
105 Antenna
201 Higher layer processing unit
202 Control unit
203 Transmission unit
204 Reception unit
205 Channel state information generating unit
206 Antenna
2011 Radio resource control unit
2012 Scheduling information interpretation unit
2031 Coding unit
2032 Modulation unit
2033 Uplink reference signal generation unit
2034 Multiplexing unit
2035 Radio transmission unit
2041 Radio reception unit
2042 Demultiplexing unit
2043 Signal detection unit
401 PUSCH resource
402, 404, 409 DMRS resources
402A to 402D, 602A to 602B DMRS group
403 PUCCH resource
405 Subframe length
406 Slot length
407 Symbol length
408 RB bandwidth
410 SRS resource
601A to 601E Signal spectrum

## Claims

1. A base station apparatus for communicating with multiple terminal apparatuses, the base station apparatus comprising a transmission unit configured to notify the terminal apparatuses of DMRS configuration information of DMRSs transmitted over multiple subframes.

2. The base station apparatus according to claim 1, wherein the DMRS configuration information includes information indicating one of OCC sequences of three or more spreading factors.

3. The base station apparatus according to claim 2, wherein the information indicating one of the OCC sequences of three or more spreading factors is associated with cyclic shift quantities applied to the DMRSs.

4. The base station apparatus according to claim 1, wherein the DMRS configuration information includes at least one of a subframe number, a slot number, and a SC-FDMA symbol number for transmitting the DMRSs by the terminal apparatuses.

5. A base station apparatus for communicating with multiple terminal apparatuses, the base station apparatus comprising a transmission unit configured to notify the terminal apparatuses of DMRS configuration information associated with DMRSs having comb-teeth-shaped signal spectra, wherein
the DMRS configuration information includes first information indicating at least either intervals of signal spectra of the DMRSs having the comb-teeth-shaped signal spectra or allocated frequency positions of the DMRSs having the comb-teeth-shaped signal spectra, and
the first information is associated with information indicating cyclic shift quantities applied to the DMRSs.

6. The base station apparatus according to claim 5, wherein
the DMRS configuration information includes information indicating one of OCC sequences, and
the first information and the information indicating one of the OCC sequences are associated with information indicating the cyclic shift quantities applied to the DMRSs.

7. A base station apparatus for communicating with multiple terminal apparatuses, the base station apparatus comprising a transmission unit configured to notify the terminal apparatuses of DMRS configuration information for configuring resources on which the terminal apparatuses transmit DMRSs, in resources on which the terminal apparatuses transmit signals other than the DMRSs.

8. The base station apparatus according to claim 7, wherein the DMRS configuration information includes information for configuring resources to be configured in resources on which the terminal apparatuses transmit SRSs, in the resources on which the terminal apparatuses transmit the DMRSs.

9. The base station apparatus according to claim 8, wherein the DMRS configuration information includes information for not configuring, in a case that the terminal apparatuses transmit the SRSs on the resource to be configured in resources on which the terminal apparatuses transmit SRSs, resources to be configured in the resources on which the terminal apparatuses transmit the SRSs, in the resources on which the terminal apparatuses transmit the DMRSs.

10. The base station apparatus according to claim 7, wherein the DMRS configuration information includes information for configuring resources to be configured in resources on which the terminal apparatuses transmit a PUSCH, in the resources on which the terminal apparatuses transmit the DMRS.

11. A terminal apparatus for communicating with a base station apparatus, the terminal apparatus comprising:
a reception unit configured to acquire DMRS configuration information of DMRSs transmitted over multiple sub frames, the DMRS configuration information being notified from the base station apparatus;
an uplink reference signal generation unit configured to generate the DMRSs to be transmitted over the multiple subframes, based on the DMRS configuration information; and
a transmission unit configured to transmit the DMRSs.

12. A terminal apparatus for communicating with a base station apparatus, the terminal apparatus comprising:
a reception unit configured to acquire DMRS configuration information associated with DMRSs having comb-teeth-shaped signal spectra, the DMRS configuration information being notified by the base station apparatus;
an uplink reference signal generation unit configured to generate the DMRSs having the comb-teeth-shaped signal spectra, based on the DMRS configuration information; and
a transmission unit configured to transmit the DMRSs, wherein
the DMRS configuration information includes first information indicating at least either intervals of signal spectra of the DMRSs having the comb-teeth-shaped signal spectra or allocated frequency positions of the DMRSs having the comb-teeth-shaped signal spectra, and
the first information is associated with information indicating cyclic shift quantities applied to the DMRSs.

13. A terminal apparatus for communicating with a base station apparatus, the terminal apparatus comprising:
an uplink reference signal generation unit configured to generate DMRSs;
a transmission unit configured to transmit the DMRSs; and
a reception unit configured to acquire DMRS configuration information for configuring resources on which the transmission unit transmits the DMRSs, in resources on which the transmission unit transmits signals other than the DMRSs, the DMRS configuration information being notified by the base station apparatus.

14. A communication method of a base station apparatus for communicating with multiple terminal apparatuses, the communication method comprising the step of notifying the terminal apparatus of DMRS configuration information of DMRSs transmitted over multiple subframes.
